# EUROPÄISCHE PATENTSCHRIFT

(11) **EP 1 465 315 B1**
(45) Veröffentlichungstag und Bekanntmachung des Hinweises auf die Patenterteilung: **21.09.2005**
(21) Anmeldenummer: 03100894.9
(22) Anmeldetag: 04.04.2003
(51) Int. Cl.: H02J 7/00

(54) **Anordnung zur Stromversorgung eines Kraftfahrzeugs**
Device for supplying electrical energy to a vehicle
Alimentation électrique pour une automobile

(43) Veröffentlichungstag der Anmeldung: 06.10.2004
(73) Patentinhaber: Ford Global Technologies, LLC, Dearborn, MI 48126 (US)
(72) Erfinder: Gaedt, Lutz Peter, 52499, Baesweiler (DE)
(74) Vertreter: Drömer, Hans-Carsten

(56) Entgegenhaltungen:
- EP-A- 0 645 278
- EP-A- 1 160 953
- DE-A- 4 139 436
- DE-A- 10 003 424
- DE-A- 19 735 708
- US-A- 6 100 663

## Beschreibung

Die Erfindung betrifft eine Anordnung zur Stromversorgung eines Kraftfahrzeuges während dessen Standzeit, wobei das Kraftfahrzeug ein Bordnetz mit einer Akkumulatorbatterie und einen Solargenerator enthält, durch den die Akkumulatorbatterie auch bei Stillstand des Motors aufladbar ist.

Akkumulatorbatterien in Kraftfahrzeugen entladen sich einerseits kontinuierlich durch den Prozeß der sog. Selbstentladung. Zum anderen sind bei modernen Fahrzeugen eine Vielzahl elektronischer Systeme auch im Stillstand mit Strom zu versorgen, z.B. Zentralverriegelungen mit Fernbedienung, Alarmanlagen, Uhren, Radios etc. Diese sog. key-off loads zusammen mit der Selbstentladung führen bei längeren Stillstandszeiten, wie sie typischerweise bei einem Autohändler oder auf Flughafenparkplätzen auftreten, zu einer vollständigen Batterieentladung mit entsprechenden negativen Konsequenzen.

Aus der EP 1 160 953 A2 ist ein Verfahren zum Aufladen einer Akkumulatorbatterie während der Fahrt für ein Kraftfahrzeug bekannt, welches ein regeneratives Bremsen ausführt. Um rückgewonnene Bremsenergie jederzeit speichern zu können, wird der Ladezustand der Batterie bei etwa 50% gehalten. Von Zeit zu Zeit wird die Batterie auf etwa 100% aufgeladen.

Die DE 41 39 436 A1 betrifft eine elektronische Schutzvorrichtung für ein Ventilatorsystem in einem Kraftfahrzeug. Der Ventilator wird elektrisch durch einen Solargenerator oder eine Akkumulatorbatterie betrieben, wobei die Akkumulatorbatterie in nicht näher erläuterter Weise auch durch den Solargenerator aufgeladen werden kann.

Die US 6 100 663 beschreibt das Aufladen der Batterien von Elektroautos während des Stillstands. Dabei soll die Akkumulatorbatterie zur Verlängerung ihrer Lebensdauer nur zwischen 30% und 70% ihrer Kapazität betrieben werden.

Aus der DE 197 35 708 A1 ist eine Einrichtung zur autonomen Stromversorgung von Wochenendhäusem bekannt, bei der eine Verbraucherbatterie über einen Verbrennungsmotor mit einem Generator zwischen einem Ladezustand von 40% und 80% ihrer maximalen Kapazität gehalten wird.

Schließlich beschreibt die DE 100 03 424 A1 ein Ladesystem für die Akkumulatorbatterie eines Kraftfahrzeuges, bei welchem ein Solargenerator direkt mit der Akkumulatorbatterie gekoppelt ist. Die Solarleistung und die Batteriekapazität sind dabei in bestimmter Weise aufeinander abgestimmt. Femer wird eine elektronische Steuerung vorgesehen, weich ein Überladen der Batterie während der Standzeit des Kraftfahrzeuges verhindert, indem sie nötigenfalls den Solargenerator von der Batterie trennt.

Aus der DE 33 19 567 A1 ist eine Anordnung zur Erhaltung der Ladung einer Akkumulatorbatterie bekannt, bei welcher während der Standzeit des Kraftfahrzeuges durch Selbstentladung entstehende Ladungsverluste mittels eines Solargenerators ausgeglichen werden sollen. Hierdurch soll verhindert werden, daß sich die Akkumulatorbatterie während einer sehr langen Standzeit vollständig entlädt und daher für ein erneutes Starten des Kraftfahrzeuges nicht mehr ausreichend Energie zur Verfügung stellen kann.

Vor diesem Hintergrund war es Aufgabe der vorliegenden Erfindung, die Stromversorgung eines Kraftfahrzeuges während dessen Standzeit zu verbessern und dabei gleichzeitig die Lebensdauer der Akkumulatorbatterien zu erhöhen.

Diese Aufgabe wird durch ein Verfahren mit den Merkmalen des Anspruchs 1 sowie durch eine Anordnung mit den Merkmalen des Anspruchs 4 gelöst. Vorteilhafte Ausgestaltungen sind in den Unteransprüchen enthalten.

Gemäß der Erfindung wird der Solargenerator derart betrieben, daß dieser in einem ersten Lademodus den Ladezustand der Akkumulatorbatterie bei Stillstand des Motors unterhalb eines vorgegebenen oberen Grenzwertes hält, wobei der vorgegebene Grenzwert unterhalb der maximalen Kapazität der Akkumulatorbatterie liegt. Damit wird eine vollständige Ladung der Akkumulatorbatterie in dem ersten Lademodus vermieden.

Der Ladezustand wird durch den Solargenerator in einem bestimmten Ladezustandsfenster - d.h. in einem Bereich zwischen einem oberen und einem unteren Ladezustandswert (SOC) - gehalten, bevorzugt zwischen etwa 70 bis 85% der maximalen Kapazität der Akkumulatorbatterie. Die Einhaltung eines unteren Ladezustandes wirkt sich positiv auf die Lebensdauer einer Akkumulatorbatterie vom Bleisäure-Typ aus. Die Überwachung eines vorgegebenen oberen Ladezustandes, der unterhalb der Maximalladung liegt, gewährleistet eine optimale Nachladbarkeit durch die Lichtmaschine in dem auf die Stillstandszeiten folgenden Fahrtbetrieb des Fahrzeuges, in dem die Akkumulatorbatterie in einem vergleichbaren Ladezustandsfenster betrieben wird. Dadurch, daß das Ladezustandsfenster im Stillstand dem Ladezustandsfenster bei Motorbetrieb weitgehend gleicht, müssen bei einem Übergang zwischen Stillstand und Motorbetrieb keine größeren Umladevorgänge stattfinden, was die Lebensdauer der Akkumulatorbatterie verlängert.

Bei einem lang andauernden Betrieb von Bleisäure-Batterien bei reduziertem Ladezustand ist eine regelmäßige Rekristallisation erforderlich, um das Elektrode n-material zu rekonditionieren und wiederzugewinnen. Dementsprechend wird gemäß der Erfindung die Akkumulatorbatterie in regelmäßigen Abständen in einem zweiten Lademodus durch den Solargenerator auf einen hohen Zielladezustand aufgeladen, der eine Rekristallisation bewirkt. Ferner wird die Stillstandszeit des Fahrzeugs gemessen und das Solarpanel erst nach Ablauf einer vorgegebenen Stillstandszeit mit der Akkumulator batterie verbunden.

Im Folgenden wird die Erfindung mit Hilfe der Figuren beispielhaft näher erläutert. Es zeigen:
- Fig. 1: ein Diagramm der Ladungseffizienz (vertikale Achse) als Funktion des Ladungszustandes SOC (horizontale Achse) für eine BleisäureBatterie;
- Fig. 2: ein Diagramm einer typischen Spannungs-Strom Relation von photovoltaischen Zellen.
- Fig. 3: ein Diagramm der Leerlaufspannung abhängig von dem Ladezustand bei Bleisäure-Batterien;
- Fig. 4: ein Diagramm der Batterielebensdauer abhängig vom Energiedurchsatz (in Vielfachen der nominellen Kapazität C_{N}) als Funktion der Entladestärke, und
- Fig. 5: ein Blockdiagramm einer erfindungsgemäßen Schaltungsanordnung.

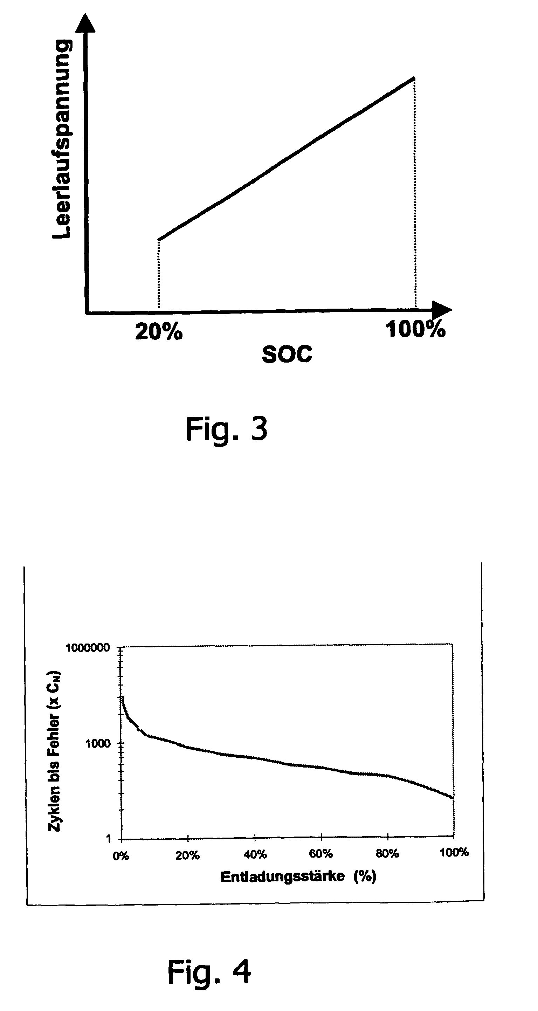

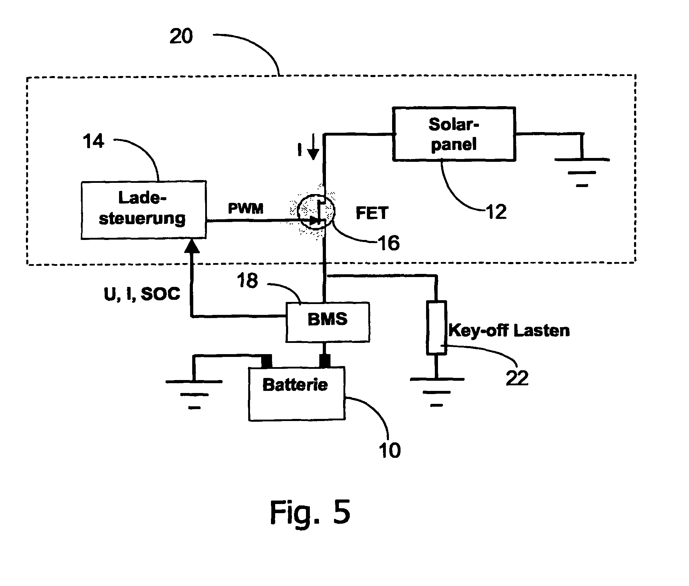

Gemäß der schematischen Darstellung in Fig. 5 wird ein Batterieakkumulator 10 vom Bleisäure-Typ von einem sog. Batterie-Monitor-System (BMS) 18 überwacht, das in verschiedenen Ausführungsformen aus dem Stand der Technik bekannt ist. Das BMS 18 ermittelt anhand verschiedener Batterieparameter wie Ausgangsspannung, Strom und Temperatur den aktuellen Ladezustand der Batterie und sorgt im Fahrbetrieb u.a. für die Einhaltung eines vorgegebenen Ladezustandsfensters der Batterie. Bei Stillstand des Motors tritt durch Selbstentladung und key-off Lasten 22 eine kontinuierliche Entladung des Batterieakkumulators 10 auf. Um dem entgegenzuwirken, ist eine insgesamt als Solargenerator 20 bezeichnete Einheit vorgesehen, die ein Solarpanel 12 aufweist. Das Solarpanel 12 kann in eine Fahrzeugscheibe oder das Schiebedach integriert sein. Der Ausgang des Solarpanels 12 ist über einen Feldeffekttransistor FET 16 mit der Batterieklemme verbunden. Die Ansteuerung des FET 16 erfolgt mittels einer Ladesteuerung 14. Diese empfängt ein Ladezustandssignal von dem Batterie Monitor System BMS 18. Bei Systemen ohne BMS 18 kann der Ladezustand im Stillstand (bei Strömen unterhalb von typisch 100 mA) auch anhand einer einfachen Messung der Klemmenspannung der Batterie bestimmt werden, da gemäß der Darstellung in Fig. 3 zwischen beiden Größen in einem weiten Bereich ein in etwa linearer Zusammenhang besteht.

Die Ladesteuerung 14 ist dahingehend ausgebildet, abhängig von dem Ladezustand des Batterieakkumulators 10 diesen in einem vorgegebenen Ladezustandsfenster von z.B. 70 bis 85 % bezogen auf eine vollständige Ladung zu halten. Dies kann dadurch geschehen, daß der FET 16 bei Erreichen der unteren Schwelle geschlossen und bei Erreichen der oberen Schwelle wieder geöffnet wird. Es kann jedoch auch eine kontinuierliche Regelung mittels einer Pulsweitenmodulation des FET- Ansteuersignals verwendet werden.

Nachfolgend werden verschiedene Kriterien für einen optimalen Ladezustand einer Bleisäure-Batterie erörtert:

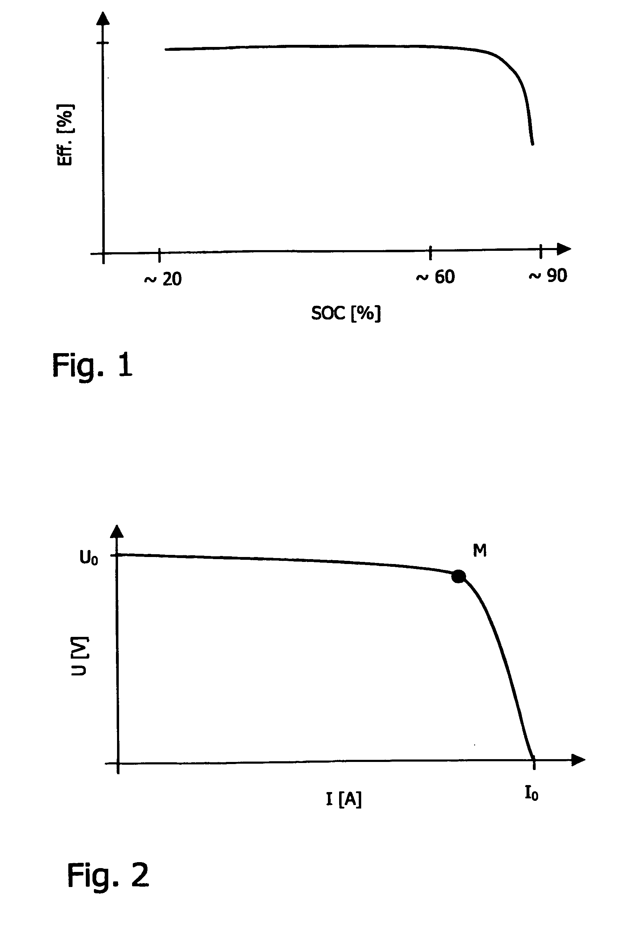

Kennzeichnend für Bleisäure-Batterien ist, daß diese zur Maximierung ihrer Lebenserwartung einen hohen Ladezustand (SOC) erfordern, welcher - wenn möglich - nahe bei 100% liegen sollte. Andererseits hängt jedoch auch die Ladedauer vom Ladezustand einer Bleisäure-Batterie ab. So kann je nach Ladezustand die Zeit zum vollständigen Aufladen derartiger Batterien 6 bis 24 Std. betragen. Diesbezüglich zeigt das Diagramm von Fig. 1 die Ladungseffizienz einer Bleisäure-Batterie (in Prozent des Maximalwertes, vertikale Achse) in Abhängigkeit vom Ladezustand SOC der Batterie (in Prozent eines Maximalwertes, horizontale Achse). Hieraus ist ersichtlich, daß die Ladungsakzeptanz von Bleisäure-Batterien bei geringem SOC sehr gut ist (ca. 98% Coulomb-Effizienz unterhalb von 60% SOC). Sie ist jedoch oberhalb von ca. 90% SOC sehr schwach, wobei das Laden bei einer konstanten Spannung und einem geringen Strom ausgeführt werden muß, um die Akkumulatorbatterie vor einem übermäßigen Druckaufbau im Inneren und einem Temperaturanstieg zu schützen.

Aufgrund der reduzierten Ladungseffizienz bei hohem Ladungszustand dauert es daher in der Praxis bei einem hohen SOC sehr lange, um eine der Akkumulatorbatterie z. B. während eines Startens des Motors entnommene Energie wieder zuzuführen. Als Konsequenz hieraus liegt der SOC von Kraftfahrzeug-Batterien standardmäßig in einem Bereich von 70 bis 85% SOC je nach der Leistungsfähigkeit der Lichtmaschine des Kraftfahrzeuges, den elektrischen Lasten und der Akkumulatorgröße (künftige Kraftfahrzeuge werden ein regeneratives Bremsen einsetzen, um die "Kosten" elektrischer Energie zu reduzieren). Für eine gute Ladungsakzeptanz sollten Bleisäure-Batterien daher bei nicht mehr als 75% SOC betrieben werden.

Ein weiterer Faktor für die Lebensdauer einer Batterie vom Bleisäure-Typ ist der Ladungsdurchsatz. Im Hinblick auf eine lange Lebensdauer sollte der Ladezustand einer Batterie nicht ständig zwischen nahezu vollständiger Ladung z. B. (95 %) und einem deutlich geringeren Ladungsniveau (z. B. 75 %) schwanken. Dementsprechend ist vorgesehen, daß die Batterie bei Motorstillstand in einem ersten Lademodus von dem Solargenerator nicht vollständig, sondern nur bis zu einem vorgegebenen Schwellwert aufgeladen wird.

Bei einem lang andauernden Betrieb von Bleisäure-Batterien bei reduziertem SOC geht die aktive Masse der Elektroden, welche üblicherweise für den Ladezustand zwischen z. B. 70 und 100% SOC verantwortlich ist, "verloren". Es ist daher eine regelmäßige Rekristallisation erforderlich, um dieses Elektrodenmaterial zu rekonditionieren und wiederzugewinnen. Wenn der standardmäßige Ziel-Ladezustand ca. 70% beträgt, wird von den Herstellern von Bleisäure-Batterien dringend empfohlen, je nach Gebrauch der Batterie in Intervallen von etwa zwei Wochen bis einem Monat eine Rekonditionierung durchzuführen (wobei ein intensiver Gebrauch eine frühere Rekonditionierung erfordert).

Wenn die Steuerungsstrategie für die Akkumulatorbatterie keinen standardmäßigen Ziel-Ladezustand von 100% SOC vorgibt, kann zumindest eine Verlängerung der Batterie-Lebensdauer durch regelmäßiges Laden der Batterie auf 100% SOC erreicht werden. Um dieses Ziel zu erreichen, wird vorgeschlagen, den Solargenerator in einem zweiten Lademodus einzusetzen, um die Bleisäure-Batterie regelmäßig auf einfache Weise und unabhängig von externen Leistungsquellen - wie z. B. einem Stromanschluß - aufzuladen. Die Konditionierung oder Ladung der Batterie kann regelmäßig ausgeführt werden, z. B. einmal pro Woche oder einmal pro Monat. Der entsprechende Ladevorgang erfordert im Gegensatz zu einer reinen Kompensation der key-off Lasten stärker dimensionierte Solarpanels.

Es sei darauf hingewiesen, daß der Anstieg des Ladezustandes der Batterie auf 100% SOC nur vorübergehend vorgenommen wird und daß der standardmäßige Ziel-Ladezustand anschließend auf ca. 70% zurückgesetzt wird. Dieses Vorgehen bewirkt einen verbesserten Ladungsdurchsatz durch die Batterie, was einen erheblichen Faktor für die Lebenserwartung einer Bleisäure-Batterie darstellt. Aus diesem Grunde wird eine Batterieaufladung alle zwei bis vier Wochen empfohlen, falls der standardmäßige Ziel-Ladezustand nahe 70% SOC liegt.

Bei einem herkömmlichen Ladevorgang mit konstanter Spannung liegt der Ziel-Ladezustand nahe 100%, wobei dieses Ziel immer von einem Solargenerator unterstützt werden kann.

Die Erfindung wird nachfolgend anhand eines Zahlenbeispiels verdeutlicht:

Die Selbstentladung einer Bleisäure-Batterie liegt typischerweise im Bereich von 0.1-1 % der nominellen Kapazität pro Tag. Eine 50 Ah-Batterie bei einer angenommenen Selbstentladung von 0.2 % benötigt daher eine durchschnittliche Energie von 0.1 Ah für die Ladungserhaltung. Dies entspricht einem Strom von 0.01 A bei ca. 14 V (das heißt ca. 0.15 W) für zehn Stunden des Tages, was von photovoltaischen Zellen bereitgestellt werden kann. Angesichts der Kosten von Solarzellen von ca. 1 EUR pro Watt ermöglicht die vorgeschlagene Technologie große Verbesserungen hinsichtlich der Systemzuverlässigkeit bei geringen Kosten. In Bezug auf die Auslegung des Solargenerators kann die Größe eines normalen Sonnendaches (40 x 80 cm) genug Leistung für das Batterieladen selbst bei bewölkten nordeuropäischen Wetterbedingungen bereitstellen. In Zentraleuropa strahlt die Sonne etwa mit einer Leistung von 1000 W/m². Je nach eingesetzter Technologie haben Standard-Solarzellen heute eine Effizienz von ca. 7-24%. Somit können diese eine Leistung von etwa 1 W/dm² erzielen, was ca. 35 W für ein Modul der Größe 40 x 80 cm² entspricht. Eine Bleisäure-Batterie von 50 Ah-Kapazität und 75% SOC kann bei einer durchschnittlichen Ladeeffizienz von 50% innerhalb von zehn Stunden auf nahezu 100% SOC wieder aufgeladen werden.

Fig. 2 zeigt einen typischen Zusammenhang zwischen der Ausgangsspannung einer photovoltaischen Zelle (vertikale Achse) und dem hieraus entnommenen Strom (horizontale Achse). U₀ stellt dabei die Spannung bei geöffnetem Stromkreis dar, während I₀ den Kurzschluß-Strom wiedergibt. Der Punkt M, bei dem die photovoltaische Zelle eine maximale Leistung abgibt, stellt ihren optimalen Betriebspunkt dar.

## Patentansprüche

1. Verfahren zur Stromversorgung eines Kraftfahrzeuges während dessen Standzeit, wobei das Kraftfahrzeug enthält:
- eine Akkumulatorbatterie (10);
- einen Solargenerator (20) mit einem Solarpanel (12), durch den die Akkumulatorbatterie (10) auch bei Stillstand des Motors aufladbar ist;
- ein Batterie-Monitor-System (18) zur Bereitstellung eines den Ladezustand der Akkumulatorbatterie (10) anzeigenden Ladezustandssignals;
umfassend die Schritte:
a) Steuerung des Aufladens der Akkumulatorbatterie (10) durch den Solargenerator (20) in Abhängigkeit vom Ladezustandssignal derart, daß in einem ersten Lademodus der Ladezustand der Akkumulatorbatterie (10) bei Stillstand des Motors in einem vorgegebenen Ladezustandsfenster mit einem vorgegebenen unteren Grenzwert und einem vorgegebenen oberen Grenzwert gehalten wird, wobei das Ladezustandsfenster im ersten Lademodus im Bereich von ca. 70 bis 85% der maximalen Kapazität der Akkumulatorbatterie (10) liegt,
b) Ausgleichen vom Bordnetz benötigter Ruheströme sowie der Selbstentladungsströme der Akkumulatorbatterie (20) durch den Solargenerator (20) bei ausreichender Beleuchtungsstärke,
c) Aufladen der Akkumulatorbatterie durch den Solargenerator (20) in vorgegebenen Abständen in einem zweiten Lademodus auf einen hohen Zielladezustand, der ca. 95 bis 100% der maximalen Kapazität der Akkumulatorbatterie (10) beträgt,
d) Messung der Stillstandszeit des Fahrzeuges und Verbinden des Solarpanels (12) mit der Akkumulatorbatterie (10) erst nach Ablauf einer vorgegebenen Stillstandszeit des Fahrzeuges.

2. Verfahren nach Anspruch 1,
**dadurch gekennzeichnet, daß**
der Ladezustand der Akkumulatorbatterie (10) auch während des Fahrtzustandes in einem Fahrt-Ladezustandsfenster gehalten wird, dessen oberer Grenzwert unterhalb der maximalen Kapazität der Akkumulatorbatterie (10) liegt.

3. Verfahren nach Anspruch 2,
**dadurch gekennzeichnet, daß**
das Fahrt-Ladezustandsfenster im Bereich von ca. 70 bis 75% der maximalen Kapazität der Akkumulatorbatterie (10) liegt

4. Anordnung zur Stromversorgung eines Kraftfahrzeuges während dessen Standzeit, enthaltend
a) eine Akkumulatorbatterie (10);
b) einen Solargenerator (20) mit einem Solarpanel (12), durch den die Akkumulatorbatterie (10) auch bei Stillstand des Motors aufladbar ist;
c) ein Batterie-Monitor-System (18) zur Bereitstellung eines den Ladezustand der Akkumulatorbatterie (10) anzeigenden Ladezustandssignals;
d) eine Ladesteuerung (14) zur Steuerung des Aufladens der Akkumulatorbatterie (10) durch den Solargenerator (20) in Abhängigkeit vom Ladezustandssignal,
wobei die Anordnung derart ausgebildet ist, daß sie ein Verfahren nach einem der Ansprüche 1 bis 3 ausführen kann.

5. Anordnung nach Anspruch 4,
**dadurch gekennzeichnet, daß**
Solarpanel (12) das zumindest bei Stillstand des Motors direkt mit der Akkumulatorbatterie elektrisch gekoppelt ist, und dessen maximale Ausgangsspannung derart bemessen oder durch eine elektronische Schaltung begrenzt ist, daß bei einem dauerhaften Anlegen dieser Spannung der obere Ladezustandsgrenzwert nicht überschritten wird.

6. Anordnung nach einem der Ansprüche 4 oder 5,
**dadurch gekennzeichnet, daß**
der Solargenerator (20) eine Ladesteuerung (14) aufweist, die Eingangssignale empfängt, welche den Ladezustand (SOC) der Akkumulatorbatterie (10) anzeigen, und die einen elektronischen Schalter (16) zur Verbindung des Solarpanels (12) mit der Akkumulatorbatterie ansteuert, und die den Ladezustand mittels des elektronischen Schalters (16) innerhalb des vorgegebenen Ladezustandsfensters im ersten Lademodus bzw. auf den hohen Zielladezustand im zweiten Lademodus regelt.

## Claims

1. Method for supplying electrical power in a motor vehicle while it is parked, with the motor vehicle containing:
- a rechargeable battery (10);
- a solar generator (20) with a solar panel (12) by means of which the rechargeable battery (10) can be charged even when the engine is stopped;
- a battery monitor system (18) for providing a state of charge signal which indicates the state of charge of the rechargeable battery (10);
comprising the following steps:
a) the charging of the rechargeable battery (10) by the solar generator (20) is controlled as a function of the state of charge signal such that, in a first charging mode, the state of charge of the rechargeable battery (10) is kept in a predetermined state of charge window, with a predetermined lower limit value and a predetermined upper limit value, when the engine is stationary, with the state of charge window in the first charging mode being in the range from about 70 to 85% of the maximum capacity of the rechargeable battery (10),
b) compensation for quiescent currents which are required by the vehicle power supply system, and for the self-discharge currents from the rechargeable battery (10) by the solar generator (20) when the lighting level is adequate,
c) charging of the rechargeable battery by the solar generator (20) at predetermined intervals in a second charging mode to a high intended state of charge, which is about 95 to 100% of the maximum capacity of the rechargeable battery (10), and
d) measurement of the time for which the vehicle has been parked, and connection of the solar panel (12) to the rechargeable battery (10) only after the vehicle has been parked for a predetermined time.

2. Method according to Claim 1,
**characterized in that**
the state of charge of the rechargeable battery (10) is also kept, while the vehicle is being driven, in a driving state of charge window, whose upper limit value is below the maximum capacity of the rechargeable battery (10).

3. Method according to Claim 2,
**characterized in that**
the driving state of charge window is in the range from about 70 to 75% of the maximum capacity of the rechargeable battery (10).

4. Arrangement for supplying electrical power in a motor vehicle while it is parked, containing
a) a rechargeable battery (10);
b) a solar generator (20) with a solar panel (12) by means of which the rechargeable battery (10) can be charged even when the engine is stopped;
c) a battery monitor system (18) for providing a state of charge signal which indicates the state of charge of the rechargeable battery (10);
d) a charging controller (14) for controlling the charging of the rechargeable battery (10) by the solar generator (20) as a function of the state of charge signal,
with the arrangement being designed such that it can carry out a method according to one of Claims 1 to 3.

5. Arrangement according to Claim 4,
**characterized in that**
at least when the engine is stopped, the solar panel (12) is electrically coupled directly to the rechargeable battery, and its maximum output voltage is designed, or is limited by an electronic circuit, such that the upper state of charge limit value is not exceeded when this voltage is applied continuously.

6. Arrangement according to one of Claims 4 or 5,
**characterized in that**
the solar generator (20) has a charging controller (14) which receives input signals which indicate the state of charge (SOC) of the rechargeable battery (10) and which drives an electronic switch (16) for connection of the solar panel (12) to the rechargeable battery, and which regulates the state of charge by means of the electronic switch (16) within the predetermined state of charge window in the first charging mode, and at the high intended state of charge in the second charging mode.

## Revendications

1. Procédé pour l'alimentation électrique d'un véhicule automobile pendant sa période d'arrêt, le véhicule automobile comprenant :
- une batterie (10) ;
- un générateur solaire (20) avec un panneau solaire (12) par le biais duquel la batterie (10) peut également être chargée pendant l'arrêt du moteur ;
- un système de surveillance de la batterie (18) destiné à fournir un signal d'état de charge indiquant l'état de charge de la batterie (10) ;
comprenant les étapes suivantes :
a) Commande de la charge de la batterie (10) par le générateur solaire (20) en fonction du signal d'état de charge de telle sorte que dans un premier mode de charge, l'état de charge de la batterie (10), à l'arrêt du moteur, soit maintenu dans un créneau d'état de charge prédéfini comprenant une valeur limite inférieure prédéfinie et une valeur limite supérieure prédéfinie, le créneau d'état de charge dans le premier mode de charge étant compris dans une plage entre environ 70 et 85 % de la capacité maximale de la batterie (10),
b) Comparaison des courants de repos requise par le réseau de bord ainsi que des courants d'autodécharge de la batterie (10) par le générateur solaire (20) lorsque l'intensité de l'éclairage est suffisante,
c) Charge de la batterie par le générateur solaire (20) à intervalles prédéfinis dans un deuxième mode de charge à un état de charge voulu élevé qui est d'environ 95 à 100 % de la capacité maximale de la batterie (10),
d) Mesure du temps d'arrêt du véhicule et connexion du panneau solaire (12) avec la batterie (10) seulement après écoulement d'un temps d'arrêt prédéfini du véhicule.

2. Procédé selon la revendication 1, **caractérisé en ce que** l'état de charge de la batterie (10) est maintenu dans un créneau d'état de charge de déplacement dont la valeur limite supérieure est inférieure à la capacité maximale de la batterie (10), et ce même pendant une situation de déplacement.

3. Procédé selon la revendication 2, **caractérisé en ce que** le créneau d'état de charge de déplacement se trouve dans la plage entre environ 70 et 75 % de la capacité maximale de la batterie (10).

4. Arrangement pour l'alimentation électrique d'un véhicule automobile pendant sa période d'arrêt, comprenant :
a) Une batterie (10) ;
b) Un générateur solaire (20) avec un panneau solaire (12) par le biais duquel la batterie (10) peut également être chargée lors de l'arrêt du moteur ;
c) Un système de surveillance de la batterie (18) destiné à fournir un signal d'état de charge indiquant l'état de charge de la batterie (10) ;
d) Une commande de charge (14) pour commander la charge de la batterie (10) par le générateur solaire (20) en fonction du signal d'état de charge,
l'arrangement étant configuré de telle sorte qu'il puisse mettre en oeuvre un procédé selon l'une des revendications 1 à 3.

5. Arrangement selon la revendication 4, **caractérisé en ce que** le panneau solaire (12) est directement relié électriquement à la batterie, au moins lors de l'arrêt du moteur, et sa tension de sortie maximale est calibrée ou limitée par un circuit électronique de telle sorte qu'une application constante de cette tension n'entraîne pas un dépassement de la valeur limite supérieure de l'état de charge.

6. Arrangement selon l'une des revendications 4 ou 5, **caractérisé en ce que** le générateur solaire (20) présente une commande de charge (14) qui reçoit des signaux d'entrée qui indiquent l'état de charge (SOC) de la batterie (10) et qui commande un commutateur électronique (16) pour relier le panneau solaire (12) à la batterie et qui régule l'état de charge au moyen du commutateur électronique (16) au sein du créneau d'état de charge prédéfini dans le premier mode de charge ou à l'état de charge voulu élevé dans le deuxième mode de charge.
